(19) Europäisches Patentamt / European Patent Office / Office européen des brevets

(11) **EP 4 276 763 B1**

(12) **EUROPEAN PATENT SPECIFICATION**

(45) Date of publication and mention
of the grant of the patent:
**28.01.2026 Bulletin 2026/05**

(51) International Patent Classification (IPC):
*G06T 15/50* (2011.01)    *G06T 19/20* (2011.01)
*G06T 11/00* (2026.01)    *G06T 7/50* (2017.01)

(21) Application number: **22173257.1**

(22) Date of filing: **13.05.2022**

(52) Cooperative Patent Classification (CPC):
**G06T 15/506; G06T 7/50; G06T 11/00;
G06T 15/503; G06T 19/20;** G06T 2207/20084;
G06T 2219/2012

(54) **IMAGE GENERATION FOR TESTING AN ELECTRONIC VEHICLE GUIDANCE SYSTEM**

BILDERZEUGUNG ZUR PRÜFUNG EINES ELEKTRONISCHEN FAHRZEUGFÜHRUNGSSYSTEMS

GÉNÉRATION D'IMAGE POUR TESTER D'UN SYSTÈME DE GUIDAGE DE VÉHICULE ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.11.2023 Bulletin 2023/46**

(73) Proprietor: **Valeo Comfort and Driving Assistance
94000 Créteil (FR)**

(72) Inventors:
• **HURYCH, David
10800 Prague (CZ)**
• **VU, Tuan Hung
94000 Creteil (FR)**
• **PEREZ, Patrick
94000 Creteil (FR)**

(74) Representative: **Jauregui Urbahn, Kristian
Valeo Schalter und Sensoren GmbH
CDA-IP
Laiernstraße 12
74321 Bietigheim-Bissingen (DE)**

(56) References cited:
**WO-A1-2021/262243    US-A1- 2021 012 560**

• **YANG ZHENPEI ET AL: "SurfelGAN:
Synthesizing Realistic Sensor Data for
Autonomous Driving", 2020 IEEE/CVF
CONFERENCE ON COMPUTER VISION AND
PATTERN RECOGNITION (CVPR), IEEE, 13 June
2020 (2020-06-13), pages 11115 - 11124,
XP033805429, DOI: 10.1109/
CVPR42600.2020.01113**
• **LOSCOS C ET AL: "INTERACTIVE VIRTUAL
RELIGHTING OF REAL SCENES", IEEE
TRANSACTIONS ON VISUALIZATION AND
COMPUTER GRAPHICS, IEEE, USA, vol. 6, no. 4,
October 2000 (2000-10-01), pages 289 - 305,
XP000976847, ISSN: 1077-2626, DOI: 10.1109/
2945.895874**
• **HA Y-H ET AL: "A Method for Generating
Simulated Nighttime Road Images Under
Automotive Headlamp Lights", IEEE
TRANSACTIONS ON VEHICULAR
TECHNOLOGY, IEEE, USA, vol. 53, no. 3, May
2004 (2004-05-01), pages 695 - 704, XP011113236,
ISSN: 0018-9545, DOI: 10.1109/TVT.2004.825790**

## Description

### Technical field

The present invention is directed to a computer-implemented method for generating a reference image or testing an electronic vehicle guidance system, wherein the method comprises receiving a two-dimensional input image, which represents a scene in an environment of a vehicle. The invention is further directed to a method for testing an electronic vehicle guidance system, to a data processing apparatus, to a computer program and to a computer-readable storage device.

### Background

The development and validation of electronic vehicle guidance systems, such as advanced driver assistance systems, ADAS, or other system for guiding a motor vehicle automatically or in part automatically, may be based on images from vehicle mounted cameras. Such development and validation processes may require a large variety of captured scenes or scenarios to satisfy the requirements necessary for a valid statistical evaluation. Electronic vehicle guidance systems that are required to work at nighttime need to be tested for various lighting conditions. For example, the various lighting conditions may include situations, where the headlights of the ego vehicle or other vehicles are turned on or off, respectively, streetlights are present or not, traffic lights have different status, or differently colored light may be emitted by numerous light sources in the environment of the ego vehicle, such as shops, commercials et cetera. The nighttime scene appearance may be heavily influenced by the position, intensity and/or color of light sources in the environment.

Consequently, in order to be able to provide various lighting conditions, an artificial scene with controlled light sources, which are physically placed in the environment of the vehicle, would have to be provided and the input of the vehicle mounted camera has to be recorded accordingly. Also, the lights, for example the headlights, of all cars in the scene would have to be controlled. The same holds for streetlights, shops, active billboards or other light sources in the environment. Such a physical setup is technically not feasible because of the vast amounts of scenes and actors that would need to be controlled.

It is known to use a generative adversarial network, GAN, to translate camera images from a given initial domain into a defined target domain. In this way, daytime images could be translated by the GAN into nighttime images. However, this approach does not allow to control the parameters of the total scene lighting in the required manner, in particular individually.

Yang Zhenpei et al: "SurfelGAN: Synthesizing Realistic Sensor Data for Autonomous Driving", 2020 IEEE/CVF CONFERENCE ON COMPUTER VISION AND PATTERN RECOGNITION (CVPR), DOI: 10.1109/CVPR42600.2020.01113, discloses to use a texture-mapped surfel representation reconstructed from a limited amount of lidar and camera data and a SurfelGAN network to generate realistic camera images from novel viewpoints.

Céline Loscos et al: "Interactive Virtual Relighting of Real Scenes", IEEE Transactions on Visualization and Computer Graphics, Volume 6, Issue 4, discloses a method to virtually relight real scenes interactively, including modifications and additions of virtual light sources and objects.

### Summary of the invention

It is an objective of the present invention to be able to test an electronic vehicle guidance system for a variety of lighting conditions in the scene around the vehicle without the need of setting up controllable physical light sources in the scene.

This objective is achieved by the respective subject-matter of the independent claims.

Further implementations and preferred embodiments are subject-matter of the dependent claims.

The invention is based on the idea to compute a reference image for testing the electronic vehicle guidance system based on an input image representing a scene in the environment of the vehicle. The reference image is computed by extracting a depth image of the scene based on the input image and using the depth image together with a predefined set of light source parameters for at least one virtual light source to generate a surface representation of the scene as it is lit by the at least one virtual light source. The original input image is combined with the surface representation to obtain the reference image.

According to an aspect of the invention, a computer-implemented method for generating a reference image for testing an electronic vehicle guidance system is provided. The computer-implemented method comprises receiving an input image, in particular a spatially two-dimensional image, which represents a scene in an environment, in particular an exterior environment, of a vehicle. A depth image of the scene is computed by applying a depth estimation algorithm to the two-dimensional input image. A surface map of the scene, which depicts a surface representation, for example an estimated surface representation, of the scene lit by at least one virtual light source, is computed depending on the depth image and depending on a predefined set of light source parameters of the at least one virtual light source. The reference image is computed depending on a weighted combination of the surface map with the input image.

Unless stated otherwise, all steps of the computer-implemented method may be performed by at least one computing unit, which may also be denoted as a data processing apparatus. In particular, the data processing apparatus comprises at least one processing circuit, which is configured or adapted to perform the steps of the computer-implemented method. For this purpose, the data processing apparatus may for example store a computer program comprising instructions which, when executed by the data processing device, in particular the at least one processing circuit, cause the data processing apparatus to execute the computer-implemented method.

The input image may for example be a camera image or an artificial image representing a potential environment of the vehicle. In fact, the environment of the vehicle, which is represented by the input image, is not necessarily identical to the vehicle, whose electronic vehicle guidance system is to be tested based on the reference image. The input image may depict the scene in the environment for example at daytime conditions, that is with a certain brightness or luminosity distribution as caused by natural or artificial light sources in the environment. This brightness or luminosity distribution may also be denoted as original brightness or luminosity distribution. The input image may for example be a daytime image of the scene and the reference is generated as a nighttime image or twilight image of the scene.

The input image is, in general, a multi-channel image, wherein different channels of the input image may correspond to different color channels in a predefined color space or color model et cetera. In principle, however, the input image could also be a single channel image or a grayscale image. The input image may be considered as a spatially two-dimensional image.

The depth image, on the other hand, is for example a single channel image, wherein each pixel of the depth image corresponds to a corresponding pixel of the input image, and the respective value of the pixel of the depth image corresponds to an estimated distance of the depicted real-world point depicted by the input image at this pixel from a predefined reference position, for example from a camera origin of a camera coordinate system or another reference coordinate system. In other words, the depth image does neither contain information about the brightness or luminosity in the input image nor about the colors in the input image et cetera.

The surface map, which may also be denoted as surface light map, on the other hand, may again be a multi-channel image and, in particular, has the name number of channels as the input image. The individual channels of the surface map may have the same meaning or definition as the corresponding channel of the input images, in particular respective colors. For example, the input image may be an RGB image, and the surface map may be an RGB image, too. Obviously, other color models can be used analogously. The different channels of the surface map may carry different information due to the predefined set of light source parameters, which define the at least one virtual light source. For example, the at least one virtual light source may emit colored light.

The light emitted by the at least one virtual light source may have specified colors, intensities and intensity decay rates et cetera. The at least one virtual light source may have specified positions, light cone directions and angles et cetera. These parameters may be specified by the at least one light source parameter.

By combining the depth image with the at least one light source parameter to generate the surface map, a version of the original scene is generated, wherein the original lighting conditions are replaced by the lighting conditions caused by the at least one virtual light source, which is, in particular, fully controllable in terms of the at least one light source parameter. Consequently, arbitrary lighting conditions of the scene may be achieved by adapting the at least one light source parameter accordingly.

Since the depth image is taken into account for generating the surface map, also the effect of the at least one virtual light source on different positions in the image or different objects depicted by the input image may accurately be considered.

However, by generating the depth image based on the input image, also information is lost, in particular texture information or, in other words, the appearance of the different objects due to their individual position, material, structure et cetera. Therefore, the original input image is combined with the surface map by means of the weighted combination to compute the reference image. The reference image therefore has the same dimensions and for example channel number as the input image and the surface map, respectively, and also contains the information, which is lost in the surface map.

The weighted combination may, for example, comprise a weighted sum of the individual pixel values of the surface map and the input image for each channel. The resulting lighting conditions according to the reference image are therefore given by a combination of the original lighting conditions and the lighting conditions caused by the at least one virtual light source. The lower the weight of the input image is in the weighted combination, the more dominant is the lighting by the at least one virtual light source and vice versa. Therefore, by choosing the weighting factors accordingly, the reference image may represent a nighttime version of the scene, or a twilight version of the scene lit by the at least one virtual light source.

The reference image may then be used as a part of an input dataset for testing the electronic vehicle guidance system. In this way, it can be tested or validated, how the electronic vehicle guidance system reacts on a situation given by the reference image. In the same manner, by applying the respective steps of the computer-implemented method multiple times to the same input image but varying the at least one light source parameter and/or by applying the method steps to different input images, a plurality of reference images may be generated in a fully controllable manner to resemble different desired lighting conditions.

In particular, by means of the invention, it is not necessary to record real camera images of the same scenario or scene at nighttime conditions with different physical light sources placed and controlled individually. Of course, such an approach can also be combined with the computer-implemented method to further increase the number of available reference images.

Consequently, due to the invention, electronic vehicle guidance systems may be extensively tested and validated for a great variety of lighting conditions, which ultimately may improve the availability and/or reliability and/or safety of the electronic vehicle guidance system in operation.

It is noted that depth estimation algorithms that may generate depth images based on given two-dimensional camera images or the like are known per se. For example, algorithms based on artificial neural networks, such as convolutional neural networks, CNNs, and/or monocular depth estimation methods may be used, such as Monodepth2, which is described in the publication by C. Godard et al.: "Digging Into Self-Supervised Monocular Depth Estimation", Proceedings of the IEEE/CVF International Conference on Computer Vision, 2019 pp. 3828-3838.

Also the method step generating the surface map may include the application of known computer algorithms, such as, for example, rendering algorithms et cetera.

According to several implementations of the computer-implemented method, computing the weighted combination of the surface map with the input image comprises computing a first summand, computing a second summand and computing a pixel value of the weighted combination by summing the first summand and the second summand.

In particular, the first summand is computed by multiplying a pixel value of the input image by a first predefined weighting factor, and the second summand is computed by multiplying the pixel value of the input image by a corresponding pixel value of the surface map and by a second weighting factor. In other words, the pixel value of the weighted combination is given by summing the first and the second summand. Therein, the pixel value of the input image, the corresponding pixel value of the surface map and the pixel value of the weighted combination may all have the same pixel coordinates, for example given in a pixel coordinate system of the input image.

Furthermore, it is understood that the described steps are carried out for a single channel of the input image and a corresponding channel of the surface map. The analog steps may be carried out for all of the pixels of the input image and the corresponding pixels of the surface map and/or for the different channels in case of a multi-channel input image and surface map.

In particular, the first and the second weighting factor may be the same for all pixels of a given channel. The first and second weighting factors may, in general, differ for different channels. However, they also may be identical for all of the channels. This may also depend on the type of channels and the used color space of the input image.

The first summand can be considered to represent a darkened pixel of the input image, wherein the darkening is defined by the first weighting factor. In particular, the first weighting factor as well as the second weighting factor may be smaller than one and greater than zero. Furthermore, a limit of the second weighting factor for the first weighting factor approaching one may be zero and a limit for the second weighting factor for the first weighting factor approaching zero may be a maximum value for the second weighting factor. In other words, if the first weighting factor is denoted by $\beta$, the second weighting factor may be proportional to $(1-\beta)$.

As described, the first summand represents the darkened version of the input image at the respective pixel. Furthermore, the second summand may be understood as a combination of the lighting information given by the pixel value of the surface map in combination with the original information, for example, texture, of the input image given by the pixel value of the input image.

By computing the weighted combination in the described manner, a fully controllable combination and fully controllable result of the appearance of the reference image may be achieved increasing the flexibility for generating a great amount of reference images with different lighting conditions.

According to several implementations, the first weighting factor is given by a value $\beta$, which is a real number within the interval $]0, 1[$ or within the interval $]0, 0.5]$ or within the interval $]0, 0.2]$. The second weighting factor is proportional to $(1-\beta)$.

Preferably, the first weighting factor is therefore equal to or smaller than 0.5. For example, the first weighting factor may be equal to or smaller than 0.3 or equal to or smaller than 0.2. This means that the overall lighting strength given by the input image is strongly reduced such that a twilight or nighttime image may be achieved by the weighted combination and the computation of the reference image as described.

For example, the second weighting factor may be given by $(1-\beta)/\gamma$, wherein $\gamma$ is equal to the maximum pixel value of all channels of the input image, if this maximum value is greater than 1 and $\gamma$ is equal to 1 otherwise. For example, the range of values for the pixel values of the input image for the individual channels may be $\{0, 1, ..., M\}$. Therein, M is a predefined maximum value which may for example be $M = 2^m$, wherein m is an integer number equal to or greater than zero, preferably equal to or greater than 1, for example, m may be equal to 6, 7, 8, 9 or 10.

According to several implementations, the reference image is computed as a target domain image by applying a generator module of a trained generative adversarial network, GAN, to the weighted combination.

In other words, the weighted combination may be considered as an intermediate image, which already combines the lighting conditions given by the at least one virtual light source with the original information of the input image. By applying the generator module of the GAN to the weighted combination, however, a more realistic image and/or a more natural appearance of the scene in the reference image may be obtained.

Therein, the weighted combination acts as an initial domain image for the GAN and the target domain image may, for example, correspond to a nighttime image or a twilight image.

GANs to translate from an initial domain to a target domain are known per se. The respective implementations of the invention are not restricted to particular generative models. For example, a GAN as described in the publications T. Park et al.: "Contrastive Learning for Unpaired Image-to-Image Translation", IEEE European Conference on Computer Vision, 2020 and J. Zhu et al.: "Unpaired Image-to-Image Translation Using Cycle-Consistent Adversarial Networks", IEEE International Conference on Computer Vision, 2017, pp. 2242-2251, may be used.

Using the GAN to compute the reference image as described is particularly beneficial due to the improved quality of the reference image. However, it is noted that this is not mandatory for the inventive idea in general. In particular, the weighted combination could also directly be used as the reference image, or the reference image could be computed from the weighted combination in a different way, which may or may not include the application of machine trained algorithms or conventional images processing algorithms.

According to several implementations, the depth estimation algorithm comprises a trained convolutional neural network, CNN.

In this way, a robust and reliable depth estimation and also a particularly accurate estimation of the depth is achievable.

According to several implementations, a three-dimensional point cloud of the scene is computed by sampling the depth image depending on a predefined set of intrinsic camera parameters. The surface map is computed depending on the three-dimensional point cloud and depending on the set of light source parameters. The point cloud is, in particular, spatially three-dimensional.

The intrinsic camera parameters may, for example, be intrinsic camera parameters of a virtual camera, which may be used as a basis for rendering the surface map in respective implementations. The intrinsic camera parameters may also be given by the intrinsic camera parameters of the respective camera, which has generated the input image. In particular, the intrinsic camera parameters of the virtual camera for rendering may be identical to the intrinsic camera parameters of the camera, which has generated the input image.

The intrinsic camera parameters may for example include a focal length of the respective camera or one or more corresponding parameters defining the focal length. The intrinsic camera parameters may also comprise a position of a camera center of projection, for example, a world coordinate system. The intrinsic camera parameters may also include a skew parameter of the camera.

In some implementations, the three-dimensional point cloud is computed according to a reprojection matrix operation. In other implementations, the three-dimensional point cloud may also be computed in a different way, for example, by using a machine trained model, such as an artificial neural network.

By computing the three-dimensional point cloud from depth image as described, it may be achieved that the surface map actually simulates or resembles a view on the scene as given by the camera, which also generated the input image. Consequently, the matching between the input image and the surface map or, in other words, the comparability of the input image to the surface map is improved.

According to several implementations, a three-dimensional surface mesh of the scene or representing the scene, respectively, is computed depending on the three-dimensional point cloud, wherein mesh cells of the three-dimensional surface mesh interpolate corresponding points of the three-dimensional point cloud. The surface map is computed depending on the three-dimensional surface mesh and depending on the set of light source parameters. The surface mesh is, in particular, spatially three-dimensional.

The surface mesh may be considered as a plurality of mesh cells, in particular interconnected mesh cells, which approximate a surface in three-dimensions given by the three-dimensional point cloud. Each surface mesh cell may be given by a geometric figure, which defines a respective portion of a two-dimensional manifold in three-dimensional space. In other words, the whole surface mesh is a two-dimensional manifold in three-dimensional space. The individual mesh cells may, for example, be given by respective triangles.

By computing the three-dimensional surface mesh, holes or faults in the three-dimensional point cloud or in the depth image may be compensated. Furthermore, the three-dimensional surface mesh may be used as a particularly suitable starting point for a rendering algorithm in case the surface map is computed by means of such a rendering algorithm based on the surface mesh.

According to several implementations, the three-dimensional surface mesh is computed by using a ball pivoting algorithm, for example, a ball pivoting algorithm as described in the publication F. Bernardini et al.: "The Ball-Pivoting Algorithm for Surface Reconstruction.", IEEE Transactions on Visualization and Computer Graphics 1999, 5, pp. 349 - 359.

According to several implementations, the surface map is computed by applying a rendering algorithm to the three-dimensional surface mesh depending on the set of light source parameters.

In respective implementations, the rendering algorithm is applied to the three-dimensional surface mesh depending on the set of light source parameters and depending on the set of intrinsic camera parameters.

By using a rendering algorithm, a particularly realistic appearance of the resulting surface map and consequently the reference image may be achieved. Suitable rendering algorithms are known per se, for example the Blender software library may be used.

According to several implementations, the three-dimensional surface mesh consists of a plurality of triangular mesh cells.

According to several implementations, a number of channels, in particular color channels, of the input image is equal to N, which is equal to or greater than one. A number of channels of the depth image is equal to one, and a number of channels of the surface map is equal to N. For example, N is equal to or greater than 3. For example N is equal to 3 or equal to 4.

According to several implementations, the set of light source parameters comprises, for each of the at least one virtual light source a position of the respective virtual light source.

The position is, in particular, a position relative to the scene. The position may therefore be a three-dimensional position given in a three-dimensional coordinate system, which may, in particular, correspond to the respective three-dimensional coordinate system in which the three-dimensional surface mesh or the three-dimensional point cloud or the depth image is given or which is used for rendering.

According to several implementations, the set of light source parameters comprises for each of the at least one virtual light source a light cone direction of the respective virtual light source and/or a light cone opening angle of the respective virtual light source.

For example, the respective virtual light source may be assumed to emit light in a predefined direction and a light cone, wherein the direction may be in the center of the light cone. The opening angle of the light cone is then the light cone opening angle of the respective virtual camera.

According to several implementations, the set of light source parameters comprises for each of the at least one virtual light source a light intensity of the respective virtual light source and/or color coordinates of the respective virtual light source.

According to a further aspect of the invention, a method for testing an electronic vehicle guidance system is provided. The method comprises carrying out a computer-implemented method for generating a reference image according to the invention. The method further comprises using the reference image as an input for the electronic vehicle guidance system. The method further comprises generating output data and/or at least one output control signal by applying the electronic vehicle guidance system to an input, which depends on or comprises the reference image. The method further comprises evaluating the output data and/or at least one output control signal.

The electronic vehicle guidance system comprises, in general, hardware components and/or software components. The hardware components may, for example, include a camera, such as a camera for generating the input image. In an operative phase of the electronic vehicle guidance system, the software components could be applied to the camera image and/or further sensor data generated by respective hardware components of the electronic vehicle guidance system or of the vehicle itself. For testing the electronic vehicle guidance system, the reference image is used instead of the real sensor data or real camera images. Then, the software components of the electronic vehicle guidance system may operate using the input data, which depends on the reference image to generate the output data and/or the at least one output control signal. The output data and/or the at least one output control signal can then be analyzed whether they are actually generated in the expected or desired way given the reference image. In this way, a validation or improvement of the electronic vehicle guidance system during validation or development of the same may be implemented.

According to another aspect of the invention, also an electronic vehicle guidance system is provided, which has been tested according to a method for testing an electronic vehicle guidance system according to the invention.

According to another aspect of the invention, a data processing apparatus comprising processing circuitry is provided. The processing circuitry is adapted to carry out a computer-implemented method according to the invention.

According to a further aspect of the invention, a computer program comprising instructions is provided. When the instructions are executed by a data processing apparatus, in particular a data processing apparatus according to the invention, the instructions cause the data processing apparatus, in particular the processing circuitry, to carry out the computer-implemented method according to the invention.

According to a further aspect of the invention, a computer-readable storage device storing a computer program according to the invention is provided.

The computer program and the computer-readable storage device according to the invention may also be denoted as respective computer program products comprising the instructions.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features which go beyond or deviate from the combinations of features set forth in the recitations of the claims may be comprised by the invention.

**Detailed description**

In the following, the invention will be explained in detail with reference to specific exemplary implementations and respective schematic drawings. In the drawings, identical or functionally identical elements may be denoted by the same reference signs.

Therein,

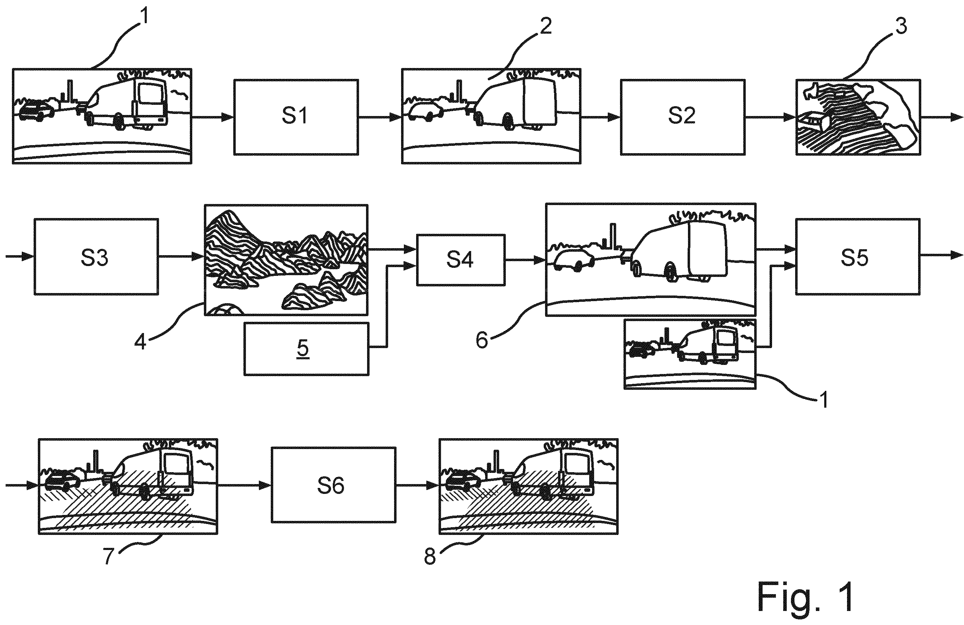

Fig. 1    shows a schematic flow diagram of an exemplary implementation of a computer-implemented method for generating a reference image for testing an electronic vehicle guidance system according to the invention.

In step S1 of the method, a two-dimensional input image 1 representing a scene in an environment of a vehicle is received, and a depth image 2 of the scene is computed by applying a corresponding depth estimation algorithm to the input image 1. In steps S2, S3 and S4, a surface map 6 of the scene is computed depending on the depth image 2 and depending on a predefined set of light source parameters 5 of at least one virtual light source. Therein, the surface map 6 depicts a surface representation of the scene lit by the at least one virtual light source.

In step S5, a weighted combination 7 of the input image 1 and the surface map 6 is computed, and in step S6, the reference image may, for example, be computed as a nighttime image 8 of the scene depending on the weighted combination 7.

The input image 1 may for example be rectified prior to applying the depth estimation algorithm. For example effects of radial distortion may be corrected prior to applying the depth estimation algorithm. Alternatively, the radial distortion may be considered insignificant and therefore be ignored.

The depth estimation algorithm may for example comprise a pre-trained depth estimation model, such as Monodepth2 or other monocular depth estimation method, to which the input image 1 is fed. The model may generate the depth image 2 as a single-channel image at the output with the same resolution as the input image 1. Every pixel of the depth image 2 may carry a depth estimate of the respective object depicted at the same pixel in the input image 1.

In step S2, a three-dimensional point cloud 3 may be computed by sampling the depth image 2 depending on a predefined set of intrinsic camera parameters, for example according to the reprojection matrix operation:

$$\begin{pmatrix} x \\ y \\ z \end{pmatrix} = z \begin{pmatrix} 1/f_x & -S/(f_x f_y) & (S c_y - c_x f_y)/(f_x f_y) \\ 0 & 1/f_y & -c_y/f_y \\ 0 & 0 & 1 \end{pmatrix} \begin{pmatrix} u \\ v \\ 1 \end{pmatrix},$$

wherein x, y and z correspond to the three-dimensional world coordination of a point of the point cloud three corresponding to the pixel given by pixel coordinates u and v of the depth image 2. The respective point of the point cloud 3 may carry the depth value of the corresponding pixel of the depth image 2.

A focal length f is given by $\|(f_x, f_y)^T\|$, $(c_x, c_y)$ define the camera center of projection in the world coordinate system and S is a skew parameter, which may also be equal to 0.

In step S3, a three-dimensional surface mesh 4 of the scene may be computed depending on the three-dimensional point cloud 3, for example by means of a triangulation procedure, which takes the points of the point cloud 3 and outputs a list of triangles that interpolate the original points. Standard methods from computer graphics may be used to create the mesh 4 from the point cloud 3, for example a ball pivoting algorithm.

In step S4, the surface map 6 may be computed by applying a rendering algorithm to the three-dimensional surface mesh 4. The rendering algorithm, which may also be denoted as software renderer, may take as an input the intrinsic and extrinsic camera parameters of a virtual rendering camera, the light source parameters 5 and the reconstructed surface mesh 4. At the output it may calculate the surface map 6 as an image of the reconstructed surface without texture, lit by defined virtual light sources, which are defined by the light source parameters 5. The extrinsic camera parameters may for example coincide with the original image camera position and rotation. These extrinsic parameters may assure that the final surface geometry rendering will correspond to objects in the original input image 1.

For each virtual light source, the light source parameters may include a respective parameter vector, wherein the vector entries may include coordinates specifying the position of the light source and a vector specifying the direction of the light source. The latter may correspond to the axis of the light cone in case of spot light. The vector entries may include an angle specifying the light cone width, a light intensity, a light intensity decay with distance from the light source and/or one or more parameters defining the color of the light source.

For example, the Blender software library in Python may be used to access the renderer and calculate the surface map 6 from the texture-less mesh 4 accordingly.

In step S5, for example a darkened version of the input image 1 may be combined with the surface map 6 to correctly render influence of the at least one virtual light source on the scene geometry.

Without restriction of generality, a three dimensional r, g, b color space is assume for illustrative purposes in the following. Then, the weighted combination 7 may be computed as

$$N(u, v, r) = I(u, v, r)\ \beta + \left\lceil \frac{I(u, v, r)}{\gamma}\ L(u, v, r) \right\rceil (1-\beta)\ ,$$

$$N(u, v, g) = I(u, v, g)\ \beta + \left\lceil \frac{I(u, v, g)}{\gamma}\ L(u, v, g) \right\rceil (1-\beta)\ ,$$

$$N(u, v, b) = I(u, v, b)\ \beta + \left\lceil \frac{I(u, v, b)}{\gamma}\ L(u, v, b) \right\rceil (1-\beta)\ ,$$

$$\gamma = \max[I(u, v, r),\ I(u, v, g),\ I(u, v, b),\ 1]\ .$$

Therein, r, g, and b specify the respective channel, N denotes respective pixel values of the weighted combination 7, I denotes respective pixel values of the input image 1 and L denotes respective pixel values of the surface map 6. I, L and N may for example be integers from 0 to 255. Furthermore, $\beta \varepsilon\ ]0, 1[$ and may for example be close to zero, for example $\beta \approx 0.1$.

In step S6, for example a generative adversarial network, GAN, may be used to generate the reference image as a night time image 8 from the weighted combination 7. To this end, the GAN may be trained for the task of translation of the distribution of weighted combinations 7 into the domain of night time images 8.

As explained, the invention addresses the problem of editing the lighting of imagery scenes. In contrast to straight-forward solutions, which would capture again the image in the same place with a different light set-up, the invention is not limited to controlled real scenarios, which are unfeasible for example in complex scenarios, for example in urban applications.

In contrast to manually altering the scene lighting by means of conventional image editing software, the invention may easily scale up to thousands of reference images for testing and validation purposes.

In several implementations of the inventive approach, however, input images may be used and the influence of virtual light sources at specific positions, with desired colors, intensities and/or directions may be included into the scene and to generate another daytime or nighttime image with realistically simulated additional scene lighting. The necessity to physically mount various light sources in a particular scene, controlling them and recording new videos is overcome.

Other than in known approaches, implementations of the invention benefit from the ability to add and explicitly control the light sources influencing the scene's visual appearance in previously captured images.

**Claims**

1. Computer-implemented method for generating a reference image for testing an electronic vehicle guidance system, wherein the method comprises receiving an input image (1), which represents a scene in an environment of a vehicle, **characterized in that**

   - a depth image (2) of the scene is computed by applying a depth estimation algorithm to the input image (1);
   - a surface map (6) of the scene, which depicts a surface representation of the scene as an image of the reconstructed surface without texture lit by at least one virtual light source, is computed depending on the depth image (2) and depending on a predefined set of light source parameters (5) of the at least one virtual light source; and

- the reference image is computed depending on a weighted combination (7) of the surface map (6) with the input image (1).

2. Computer-implemented method according to claim 1,
   **characterized in that**
   for computing the weighted combination (7) of the surface map (6) with the input image (1),

   - a first summand is computed by multiplying a pixel value of the input image (1) by a first weighting factor;
   - a second summand computed by multiplying the pixel value of the input image (1) by a corresponding pixel value of the surface map (6) and by a second weighting factor; and
   - a pixel value of the weighted combination (7) is computed by summing the first summand and the second summand.

3. Computer-implemented method according to claim 2,
   **characterized in that**

   - the first weighting factor is given by a value $\beta$, which is a real number within the interval $]0, 1[$ or within the interval $]0, 0.5]$ or within the interval $]0, 0.2]$;
   - the second weighting factor is proportional to $(1- \beta)$.

4. Computer-implemented method according to one of the preceding claims,
   **characterized in that**
   the reference image is computed as a target domain image (8) by applying a generator module of a trained generative adversarial network to the weighted combination (7).

5. Computer-implemented method according to one of the preceding claims,
   **characterized in that**
   the input image is a daytime image of the scene and the reference image is generated as a nighttime image or twilight image of the scene.

6. Computer-implemented method according to one of the preceding claims,
   **characterized in that**
   the depth estimation algorithm comprises a trained convolutional neural network.

7. Computer-implemented method according to one of the preceding claims,
   **characterized in that**

   - a three-dimensional point cloud (3) of the scene is computed by sampling the depth image (2) depending on a predefined set of intrinsic camera parameters; and
   - the surface map (6) is computed depending on the three-dimensional point cloud (3) and depending on the set of light source parameters (5).

8. Computer-implemented method according to claim 7,
   **characterized in that**

   - a three-dimensional surface mesh (4) of the scene is computed depending on the three-dimensional point cloud (3), wherein mesh cells of the three-dimensional surface mesh (4) interpolate corresponding points of the three-dimensional point cloud (3); and
   - the surface map (6) is computed depending on the three-dimensional surface mesh (4) and depending on the set of light source parameters (5).

9. Computer-implemented method according to claim 8,
   **characterized in that**
   the surface map (6) is computed by applying a rendering algorithm to the three-dimensional surface mesh (4) depending on the set of light source parameters (5).

10. Computer-implemented method according to one of the claims 8 or 9,
    **characterized in that**

three-dimensional surface mesh (4) consists of a plurality of triangular mesh cells.

11. Computer-implemented method according to one of the preceding claims,
**characterized in that**

- a number of channels of the input image (1) is equal to N, which is equal to or greater than one;
- a number of channels of the depth image (2) is equal to one; and
- a number of channels of the surface map (6) is equal to N.

12. Computer-implemented method according to one of the preceding claims,
**characterized in that**
the set of light source parameters (5) comprises, for each of the at least one virtual light source,

- a position of the respective virtual light source; and/or
- a light cone direction of the respective virtual light source; and/or
- a light cone opening angle of the respective virtual light source; and/or
- a light intensity of the respective virtual light source; and/or
- a spatial light intensity decay rate of the respective virtual light source; and/or
- color coordinates of the respective virtual light source.

13. Method for testing an electronic vehicle guidance system, comprising

- carrying out a computer-implemented method for generating a reference image according to one of the preceding claims;
- using the reference image as an input for the electronic vehicle guidance system;
- generating output data and/or at least one output control signal by applying the electronic vehicle guidance system to an input, which depends on (comprises) the reference image; and
- evaluating the output data and/or at least one output control signal.

14. Data processing apparatus comprising processing circuitry, which is adapted to carry out a computer-implemented method according to one of claims 1 to 12.

15. Computer program product comprising instructions, which, when executed by a data processing apparatus, cause the data processing apparatus to carry out a computer-implemented method according to one of claims 1 to 12.

**Patentansprüche**

1. Computerimplementiertes Verfahren zum Erzeugen eines Referenzbilds zum Prüfen eines elektronischen Fahrzeugführungssystems, wobei das Verfahren ein Empfangen eines Eingabebilds (1) umfasst, das eine Szene in einer Umgebung eines Fahrzeugs repräsentiert,
**dadurch gekennzeichnet, dass**

- ein Tiefenbild (2) der Szene durch Anwenden eines Tiefenschätzungsalgorithmus auf das Eingabebild (1) berechnet wird;
- eine Oberflächenkarte (6) der Szene, die eine Oberflächendarstellung der Szene als ein Bild der rekonstruierten Oberfläche ohne Textur darstellt, die durch mindestens eine virtuelle Lichtquelle beleuchtet wird, in Abhängigkeit von dem Tiefenbild (2) und in Abhängigkeit von einem vordefinierten Satz von Lichtquellenparametern (5) der mindestens einen virtuellen Lichtquelle berechnet wird und
- das Referenzbild in Abhängigkeit von einer gewichteten Kombination (7) der Oberflächenkarte (6) mit dem Eingabebild (1) berechnet wird.

2. Computerimplementiertes Verfahren nach Anspruch 1, **dadurch gekennzeichnet, dass**
zum Berechnen der gewichteten Kombination (7) der Oberflächenkarte (6) mit dem Eingabebild (1)

- ein erster Summand durch Multiplizieren eines Pixelwerts des Eingabebilds (1) mit einem ersten Gewichtungsfaktor berechnet wird;
- ein zweiter Summand durch Multiplizieren des Pixelwerts des Eingabebilds (1) mit einem entsprechenden Pixelwert der Oberflächenkarte (6) und mit einem zweiten Gewichtungsfaktor berechnet wird und
- ein Pixelwert der gewichteten Kombination (7) durch Summieren des ersten Summanden und des zweiten Summanden berechnet wird.

3. Computerimplementiertes Verfahren nach Anspruch 2, **dadurch gekennzeichnet, dass**

- der erste Gewichtungsfaktor durch einen Wert $\beta$ gegeben ist, der eine reelle Zahl innerhalb des Intervalls ]0, 1[ oder innerhalb des Intervalls ]0, 0,5] oder innerhalb des Intervalls ]0, 0,2] ist;
- der zweite Gewichtungsfaktor proportional zu $(1-\beta)$ ist.

4. Computerimplementiertes Verfahren nach einem der vorhergehenden Ansprüche, **dadurch gekennzeichnet, dass**
das Referenzbild als ein Zieldomänenbild (8) durch Anwenden eines Generatormoduls eines trainierten generativen Adversarialnetzwerks auf die gewichtete Kombination (7) berechnet wird.

5. Computerimplementiertes Verfahren nach einem der vorhergehenden Ansprüche, **dadurch gekennzeichnet, dass**
das Eingabebild ein Tagesbild der Szene ist und das Referenzbild als Nachtbild oder Dämmerungsbild der Szene erzeugt wird.

6. Computerimplementiertes Verfahren nach einem der vorhergehenden Ansprüche, **dadurch gekennzeichnet, dass**
der Tiefenschätzungsalgorithmus ein trainiertes neuronales Faltungsnetzwerk umfasst.

7. Computerimplementiertes Verfahren nach einem der vorhergehenden Ansprüche, **dadurch gekennzeichnet, dass**

- eine dreidimensionale Punktwolke (3) der Szene durch Abtasten des Tiefenbilds (2) in Abhängigkeit von einem vordefinierten Satz intrinsischer Kameraparameter berechnet wird und
- die Oberflächenkarte (6) in Abhängigkeit von der dreidimensionalen Punktwolke (3) und in Abhängigkeit von dem Satz von Lichtquellenparametern (5) berechnet wird.

8. Computerimplementiertes Verfahren nach Anspruch 7, **dadurch gekennzeichnet, dass**

- ein dreidimensionales Oberflächennetz (4) der Szene in Abhängigkeit von der dreidimensionalen Punktwolke (3) berechnet wird, wobei Netzzellen des dreidimensionalen Oberflächennetzes (4) entsprechende Punkte der dreidimensionalen Punktwolke (3) interpolieren; und
- die Oberflächenkarte (6) in Abhängigkeit von dem dreidimensionalen Oberflächennetz (4) und in Abhängigkeit von dem Satz von Lichtquellenparametern (5) berechnet wird.

9. Computerimplementiertes Verfahren nach Anspruch 8, **dadurch gekennzeichnet, dass**
die Oberflächenkarte (6) durch Anwenden eines Render-Algorithmus auf das dreidimensionale Oberflächennetz (4) in Abhängigkeit von dem Satz von Lichtquellenparametern (5) berechnet wird.

10. Computerimplementiertes Verfahren nach einem der Ansprüche 8 oder 9, **dadurch gekennzeichnet, dass**
das dreidimensionale Oberflächennetz (4) aus einer Mehrheit von dreieckigen Netzzellen besteht.

11. Computerimplementiertes Verfahren nach einem der vorhergehenden Ansprüche, **dadurch gekennzeichnet, dass**

- eine Anzahl von Kanälen des Eingabebilds (1) gleich N ist, was gleich oder größer als eins ist;
- eine Anzahl von Kanälen des Tiefenbilds (2) gleich eins ist und
- eine Anzahl von Kanälen der Oberflächenkarte (6) gleich N ist.

12. Computerimplementiertes Verfahren nach einem der vorhergehenden Ansprüche, **dadurch gekennzeichnet, dass**
der Satz von Lichtquellenparametern (5) für jede der mindestens einen virtuellen Lichtquelle umfasst:

- eine Position der jeweiligen virtuellen Lichtquelle und/oder
- eine Lichtkegelrichtung der jeweiligen virtuellen Lichtquelle und/oder
- einen Lichtkegelöffnungswinkel der jeweiligen virtuellen Lichtquelle und/oder
- eine Lichtintensität der jeweiligen virtuellen Lichtquelle und/oder
- eine räumliche Lichtintensitätsabklingrate der jeweiligen virtuellen Lichtquelle und/oder
- Farbkoordinaten der jeweiligen virtuellen Lichtquelle.

13. Verfahren zum Prüfen eines elektronischen Fahrzeugführungssystems, umfassend

- Ausführen eines computerimplementierten Verfahrens zum Erzeugen eines Referenzbilds nach einem der vorhergehenden Ansprüche;
- Verwenden des Referenzbilds als Eingabe für das elektronische Fahrzeugführungssystem;
- Erzeugen von Ausgabedaten und/oder mindestens einem Ausgabesteuersignal durch Anwenden des elektronischen Fahrzeugführungssystems auf eine Eingabe, die vom Referenzbild abhängt (dieses umfasst); und
- Auswerten der Ausgabedaten und/oder mindestens eines Ausgabesteuersignals.

14. Datenverarbeitungseinrichtung, umfassend eine Verarbeitungsschaltungsanordnung, die zum Ausführen eines computerimplementierten Verfahrens nach einem der Ansprüche 1 bis 12 angepasst ist.

15. Computerprogrammprodukt, umfassend Anweisungen, die bei Ausführung durch eine Datenverarbeitungseinrichtung die Datenverarbeitungseinrichtung zum Ausführen eines computerimplementierten Verfahrens nach einem der Ansprüche 1 bis 12 veranlassen.

**Revendications**

1. Procédé, mis en œuvre par ordinateur, de génération d'une image de référence pour tester un système électronique de guidage de véhicule, le procédé comprenant la réception d'une image d'entrée (1), qui représente une scène dans un environnement d'un véhicule, **caractérisé en ce que**

- une image de profondeur (2) de la scène est calculée par application d'un algorithme d'estimation de profondeur à l'image d'entrée (1) ;
- une carte de surface (6) de la scène, qui illustre une représentation de surface de la scène sous la forme d'une image de la surface reconstruite sans texture éclairée par au moins une source lumineuse virtuelle, est calculée en fonction de l'image de profondeur (2) et en fonction d'un ensemble prédéfini de paramètres de source lumineuse (5) de l'au moins une source lumineuse virtuelle ; et
- l'image de référence est calculée en fonction d'une combinaison pondérée (7) de la carte de surface (6) avec l'image d'entrée (1).

2. Procédé mis en œuvre par ordinateur selon la revendication 1,
**caractérisé en ce que**
pour le calcul de la combinaison pondérée (7) de la carte de surface (6) avec l'image d'entrée (1),

- un premier terme de somme est calculé par multiplication d'une valeur de pixel de l'image d'entrée (1) par un premier facteur de pondération ;
- un deuxième terme de somme est calculé par multiplication de la valeur de pixel de l'image d'entrée (1) par une valeur de pixel correspondante de la carte de surface (6) et par un deuxième facteur de pondération ; et
- une valeur de pixel de la combinaison pondérée (7) est calculée par sommation du premier terme de somme et du deuxième terme de somme.

3. Procédé mis en œuvre par ordinateur selon la revendication 2,
**caractérisé en ce que**

- le premier facteur de pondération est donné par une valeur $\beta$, qui est un nombre réel appartenant à l'intervalle ]0, 1[ ou à l'intervalle ]0, 0,5] ou à l'intervalle ]0, 0,2] ;
- le deuxième facteur de pondération est proportionnel à $(1-\beta)$.

4. Procédé mis en œuvre par ordinateur selon l'une des revendications précédentes,

**caractérisé en ce que**

l'image de référence est calculée sous la forme d'une image de domaine cible (8) par application d'un module générateur d'un réseau antagoniste génératif entraîné à la combinaison pondérée (7).

**5.** Procédé mis en œuvre par ordinateur selon l'une des revendications précédentes,
**caractérisé en ce que**

l'image d'entrée est une image de jour de la scène et l'image de référence est générée sous la forme d'une image de nuit ou d'une image de crépuscule de la scène.

**6.** Procédé mis en œuvre par ordinateur selon l'une des revendications précédentes,
**caractérisé en ce que**

l'algorithme d'estimation de profondeur comprend un réseau de neurones convolutif entraîné.

**7.** Procédé mis en œuvre par ordinateur selon l'une des revendications précédentes,
**caractérisé en ce que**

- un nuage de points tridimensionnel (3) de la scène est calculé par échantillonnage de l'image de profondeur (2) en fonction d'un ensemble prédéfini de paramètres intrinsèques de caméra ; et
- la carte de surface (6) est calculée en fonction du nuage de points tridimensionnel (3) et en fonction de l'ensemble de paramètres de source lumineuse (5).

**8.** Procédé mis en œuvre par ordinateur selon la revendication 7,
**caractérisé en ce que**

- un maillage de surface tridimensionnel (4) de la scène est calculé en fonction du nuage de points tridimensionnel (3), des mailles du maillage de surface tridimensionnel (4) interpolant des points correspondants du nuage de points tridimensionnel (3) ; et
- la carte de surface (6) est calculée en fonction du nuage de points tridimensionnel (4) et en fonction de l'ensemble de paramètres de source lumineuse (5).

**9.** Procédé mis en œuvre par ordinateur selon la revendication 8,
**caractérisé en ce que**

la carte de surface (6) est calculée par application d'un algorithme de rendu au maillage de surface tridimensionnel (4) en fonction de l'ensemble de paramètres de source lumineuse (5).

**10.** Procédé mis en œuvre par ordinateur selon l'une des revendications 8 ou 9,
**caractérisé en ce que**

le maillage de surface tridimensionnel (4) est constitué d'une pluralité de mailles triangulaires.

**11.** Procédé mis en œuvre par ordinateur selon l'une des revendications précédentes,
**caractérisé en ce que**

- le nombre de canaux de l'image d'entrée (1) est égal à N, lequel est supérieur ou égal à un ;
- le nombre de canaux de l'image de profondeur (2) est égal à un ; et
- le nombre de canaux de la carte de surface (6) est égal à N.

**12.** Procédé mis en œuvre par ordinateur selon l'une des revendications précédentes,
**caractérisé en ce que**

l'ensemble de paramètres de source lumineuse (5) comprend, pour chacune de l'au moins une source lumineuse virtuelle,

- une position de la source lumineuse virtuelle respective ; et/ou
- une direction de cône lumineux de la source lumineuse virtuelle respective ; et/ou
- un angle d'ouverture de cône lumineux de la source lumineuse virtuelle respective ; et/ou
- une intensité lumineuse de la source lumineuse virtuelle respective ; et/ou
- un taux de décroissance spatiale de l'intensité lumineuse de la source lumineuse virtuelle respective ; et/ou
- des coordonnées colorimétriques de la source lumineuse virtuelle respective.

13. Procédé de test d'un système électronique de guidage de véhicule, comprenant

- la réalisation d'un procédé, mis en œuvre par ordinateur, de génération d'une image de référence selon l'une des revendications précédentes ;
- l'utilisation de l'image de référence comme entrée pour le système électronique de guidage du véhicule ;
- la génération de données de sortie et/ou d'au moins un signal de commande de sortie par application du système électronique de guidage de véhicule à une entrée, qui dépend de (comprend) l'image de référence ; et
- l'évaluation des données de sortie et/ou de l'au moins un signal de commande de sortie.

14. Appareil de traitement de données comprenant des circuits de traitement, lesquels sont adaptés à réaliser un procédé mis en œuvre par ordinateur selon l'une des revendications 1 à 12.

15. Produit-programme d'ordinateur comprenant des instructions qui, lorsqu'elles sont exécutées par un appareil de traitement de données, amènent l'appareil de traitement de données à réaliser un procédé mis en œuvre par ordinateur selon l'une des revendications 1 à 12.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YANG ZHENPEI et al.** SurfelGAN: Synthesizing Realistic Sensor Data for Autonomous Driving. *IEEE/CVF CONFERENCE ON COMPUTER VISION AND PATTERN RECOGNITION (CVPR)*, 2020
- **CÉLINE LOSCOS et al.** Interactive Virtual Relighting of Real Scenes. *IEEE Transactions on Visualization and Computer Graphics*, vol. 6 (4)
- **C. GODARD et al.** Digging Into Self-Supervised Monocular Depth Estimation. *Proceedings of the IEEE/CVF International Conference on Computer Vision*, 2019, 3828-3838
- **T. PARK et al.** Contrastive Learning for Unpaired Image-to-Image Translation. *IEEE European Conference on Computer Vision*, 2020
- **J. ZHU et al.** Unpaired Image-to-Image Translation Using Cycle-Consistent Adversarial Networks. *IEEE International Conference on Computer Vision*, 2017, 2242-2251
- **F. BERNARDINI et al.** The Ball-Pivoting Algorithm for Surface Reconstruction. *IEEE Transactions on Visualization and Computer Graphics*, 1999, vol. 5, 349-359